# EUROPÄISCHE PATENTSCHRIFT

(11) **EP 3 807 701 B1**
(45) Veröffentlichungstag und Bekanntmachung des Hinweises auf die Patenterteilung: **25.11.2026**
(21) Anmeldenummer: 19731673.0
(22) Anmeldetag: 13.06.2019
(51) Int. Cl.: G02B 27/01

(54) **GERÄT ZUM GENERIEREN EINES VIRTUELLEN BILDES MIT RÄUMLICH GETRENNTER LICHTQUELLE**
APPARATUS FOR GENERATING A VIRTUAL IMAGE WITH SPATIALLY SEPARATED LIGHT SOURCES
APPAREIL POUR LA GÉNÉRATION D'UNE IMAGE VIRTUELLE COMPRENANT UNE SOURCE LUMINEUSE SÉPARÉE DANS L'ESPACE

(30) Priorität: 15.06.2018 DE 102018209646; 04.07.2018 DE 102018211035
(43) Veröffentlichungstag der Anmeldung: 21.04.2021
(73) Patentinhaber: AUMOVIO Germany GmbH, 60488 Frankfurt am Main (DE)
(72) Erfinder: MITSCH, Rudolf, 65824 Schwalbach a. Ts. (DE); JACHENS, Arne, 65824 Schwalbach a. Ts. (DE)
(74) Vertreter: Aumovio Corporation
(86) Internationale Anmeldenummer: PCT/EP2019/065548
(87) Internationale Veröffentlichungsnummer: WO 2019/238847

(56) Entgegenhaltungen:
- EP-A1- 1 226 464
- EP-A2- 2 065 989
- EP-B1- 1 226 464
- WO-A1-2008/157469
- WO-A1-2008/157469
- DE-A1- 102016 115 938
- JP-A- H1 197 779
- JP-B2- 4 254 030
- US-A1- 2012 224 062
- US-A1- 2017 031 161
- US-B2- 7 280 567

## Beschreibung

Die vorliegende Erfindung betrifft ein Head-Up Display für ein Fahrzeug mit einem Gerät zum Generieren eines virtuellen Bildes.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Die Verwendung von Lichtwellenleitern in Head-Up-Displays ist zudem aus DE 10 2016 115 938 A1, US 2017/0031161 A1 und US 2012/0224062 A1 bekannt.

Bedingt durch systeminhärente Verluste bedarf ein solches auf einem Lichtwellenleiter basierendes Head-Up-Display starker Lichtquellen. Dazu können beispielsweise entsprechend starke Laserdioden genutzt werden. Diese benötigen allerdings einen nicht unerheblichen Bauraum und verursachen zudem eine thermische Belastung der bildgebenden Einheit. Alternativ wird versucht, mit einer dem aktuellen Stand der Technik entsprechenden Helligkeit auszukommen. Dies hat allerdings eine recht geringe Helligkeit des virtuellen Bildes zur Folge.

Die Verwendung von Lasern als Lichtquellen für Anzeigevor-richtungen ist beispielsweise aus EP 1 226 464 A1, JP 4 254 030 B2, JP H11-97779 A, WO 2008/157469 A1 und US 7,280,567 B2 bekannt.

EP 2 065 989 A2 beschreibt eine Vorrichtung zum Erzeugen von RGB-Laserlicht.

Es ist eine Aufgabe der vorliegenden Erfindung, ein in Hinblick auf die oben genannten Schwierigkeiten verbessertes Head-Up-Display für ein Fahrzeug mit einem Gerät zum Generieren eines virtuellen Bildes vorzuschlagen.

Diese Aufgabe wird durch ein Head-Up-Display für ein Fahrzeug mit den Merkmalen des Anspruchs 1 gelöst. Bevorzugte Ausgestaltungen der Erfindung sind Gegenstand der abhängigen Ansprüche.

Gemäß der Erfindung umfasst ein Head-Up-Display für ein Fahrzeug ein Gerät zum Generieren eines virtuellen Bildes, wobei das Gerät zum Generieren eines virtuellen Bildes aufweist:
- einen Bildgenerator mit einem Anzeigeelement umfassend eine steuerbare Spiegeleinheit zum Erzeugen eines Bildes;
- zumindest eine Lichtquelle zum Erzeugen von Licht mit vorgegebener Wellenlänge zum Beleuchten der steuerbaren Spiegeleinheit;
- einen flächigen Lichtwellenleiter mit zweidimensionaler Vergrößerung zum Aufweiten einer Austrittspupille, in den das von der steuerbaren Spiegeleinheit ausgehende Licht eingekoppelt wird; und
- ein Verstärkermedium zum Verstärken des von der zumindest einen Lichtquelle erzeugten Lichts, wobei das Verstärkermedium ein Lichtfaserverstärker ist, mit dem eine Pumplichtquelle zum Bereitstellen von Energie für den Lichtfaserverstärker mit dem Bildgenerator verbunden ist, und wobei die Spiegeleinheit aus einer zweidimensionalen Anordnung von Mikrospiegeln besteht.

Bei einem auf einem flächigen Lichtwellenleiter basierenden Head-Up-Display wird eine hohe Lichtstärke in der Beleuchtungseinheit des Head-Up-Displays benötigt. Um die hohen Lichtstärken mit einem Laser zur Verfügung zu stellen, wird erfindungsgemäß ein Verstärkermedium genutzt. Das Licht mit der benötigten Wellenlänge wird durch das Verstärkermedium geschickt. Nach dem Verlassen des Verstärkermediums wird das verstärkte Licht mit der gewünschten hohen Lichtleistung auf die bilderzeugende Einheit, das Anzeigeelement, geleitet.

Die erfindungsgemäße Lösung ermöglicht es, auch bei hellen Umgebungsbedingungen ein gut sichtbares virtuelles Bild zu generieren, ohne eine Lichtquelle hoher Leistung zu erfordern. Zudem kann ein Teil der bildgebenden Einheit**,** nämlich die Lichterzeugung, räumlich flexibel platziert werden. Dies erlaubt eine optimierte Nutzung des begrenzten zur Verfügung stehenden Bauraums.

Erfindungsgemäß ist das Verstärkermedium ein Faserverstärker. Die Verwendung eines Faserverstärkers hat den Vorteil, dass das Verstärkermedium in diesem Fall zusätzlich zur Verstärkung des in den Faserverstärker eingekoppelten Lichts auch eine Führung des Lichts in Richtung der bilderzeugenden Einheit ermöglicht.

Erfindungsgemäß weist das Gerät zum Generieren eines virtuellen Bildes eine Pumplichtquelle zum Bereitstellen von Energie für das Verstärkermedium auf. Die Pumplichtquelle wird in Verbindung mit einem Faserverstärker genutzt. Bei dieser Lösung wird das Verstärkermedium durch eine starke Lichtquelle gepumpt. Die Pumplichtquelle emittiert dabei eine andere Wellenlänge als die zu verstärkende Wellenlänge. Die Verwendung einer Pumplichtquelle ermöglicht es, die Energiequelle, und damit eine Wärmequelle, von der restlichen bildgebenden Einheit entfernt zu platzieren. Dies reduziert die thermische Belastung der restlichen bildgebenden Einheit.

Gemäß einem Aspekt der Erfindung ist die Lichtquelle ein Laser. Laser haben den Vorteil, paralleles und kollimiertes Licht bereitzustellen. Zudem emittieren Laser in der Regel schmalbandiges Licht in einem wohldefinierten Wellenlängenbereich.

Gemäß einem Aspekt der Erfindung wird das Pumplicht nach Verlassen des Verstärkermediums aus dem Strahlengang ausgekoppelt. Vorzugsweise wird das Pumplicht dabei durch einen teildurchlässigen Spiegel aus dem Strahlengang ausgekoppelt und in eine Strahlenfalle geleitet. Am Ausgang des Verstärkermediums wird das verstärkte Licht mit der gewünschten Wellenlänge von dem Licht mit der Pumpwellenlänge getrennt. Auf diese Weise wird sichergestellt**,** dass das nach der Verstärkung verbleibende Pumplicht nicht in den Lichtwellenleiter eingekoppelt wird, was sich störend auf die Bildqualität auswirken könnte.

Gemäß einem Aspekt der Erfindung weist das Gerät drei Lichtquellen zum Erzeugen von Licht in drei Elementarfarben auf. Soll ein Farbbild angezeigt werden, werden wenigstens drei Lichtquellen vorgesehen, je nach Bedarf mit entsprechenden Verstärkern. Beispielsweise kann für jede der RGB-Farben eine Lichtquelle vorgesehen sein. Statt Rot, Grün und Blau können ebenfalls andere Farben Verwendung finden, die geeignet sind, ein Farbbild zu bilden.

Gemäß einem Aspekt der Erfindung weist das Gerät zumindest ein nichtlinear-optisches Medium auf, um Licht in einer Elementarfarbe durch Frequenzkonversion aus dem von einer Lichtquelle abgegebenen Licht zu generieren. Faserverstärker sind im Bereich der optischen Datenübertragung weit verbreitet und somit kostengünstig verfügbar, arbeiten dort aber in der Regel im nahen infraroten Spektralbereich. Durch Frequenzkonversion lässt sich bei Verwendung derartiger Faserverstärker die gewünschte Elementarfarbe im sichtbaren Spektralbereich generieren.

Gemäß einem Aspekt der Erfindung ist die Frequenzkonversion eine Frequenzverdopplung. Die Frequenzverdopplung zeichnet sich unter den nichtlinearen optischen Effekten durch einen vergleichsweise hohen Wirkungsgrad aus.

Vorzugsweise wird ein erfindungsgemäßes Head-Up-Display in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch ein erfindungsgemäßes Gerät zum Generieren eines virtuellen Bildes; und
- Fig. 6: zeigt schematisch eine bildgebende Einheit mit einer räumlich getrennten Lichtquelle.

### Figurenbeschreibung

Zum besseren Verständnis der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

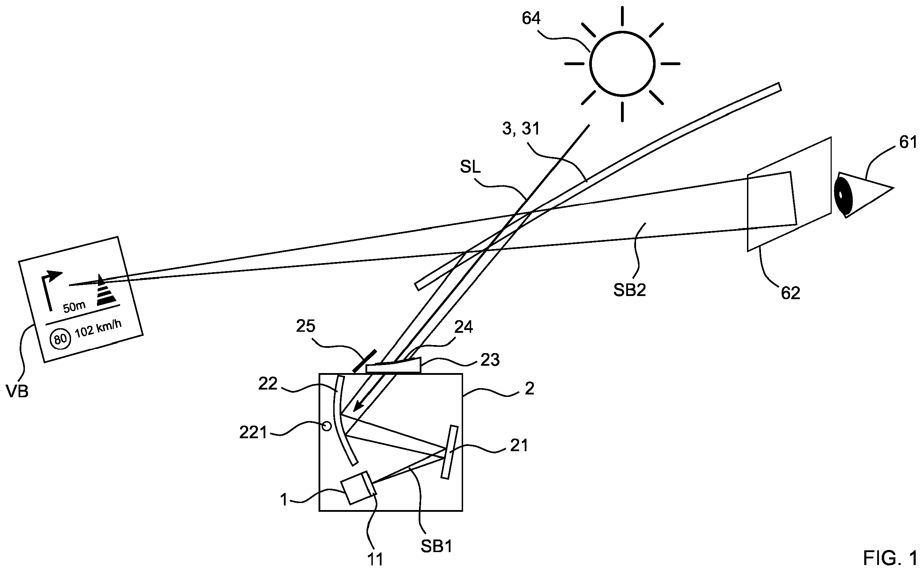

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodass das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

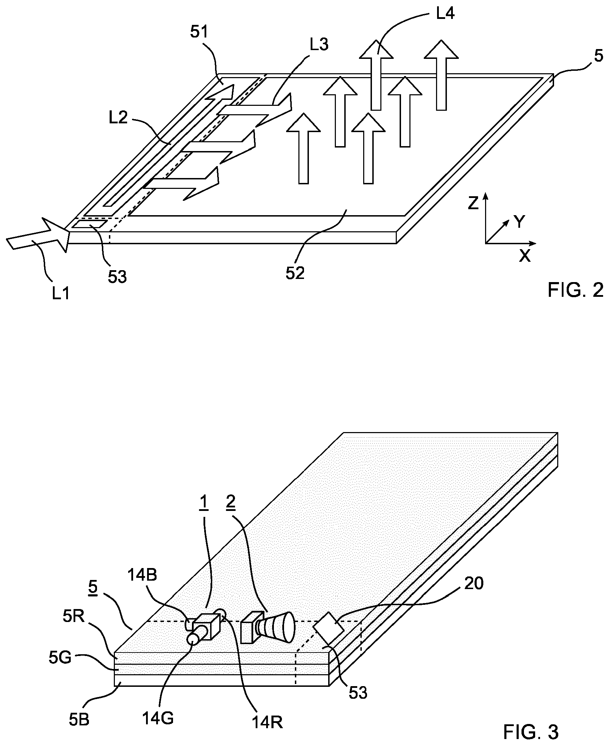

Fig. 2 zeigt in schematischer räumlicher Darstellung einen flächigen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2.

In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei flächigen Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

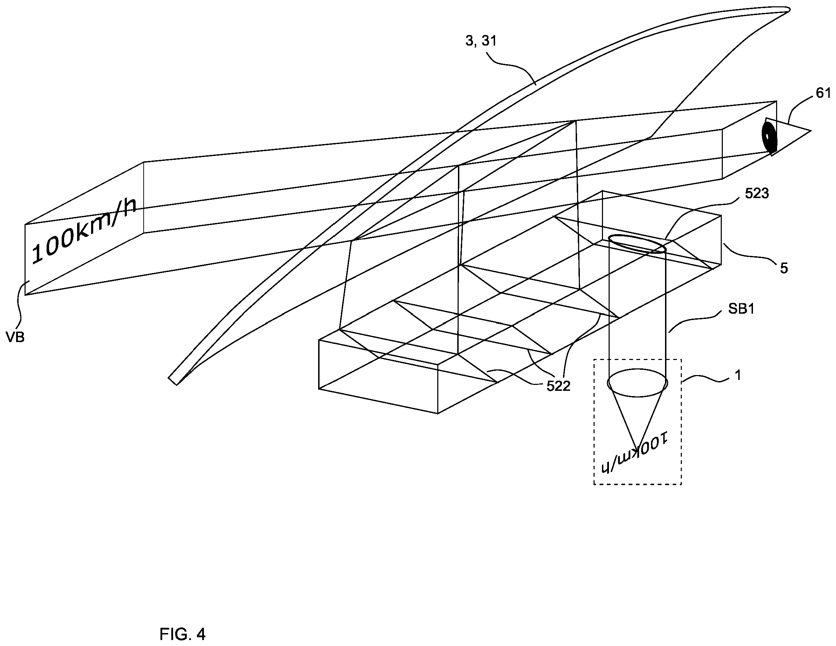

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

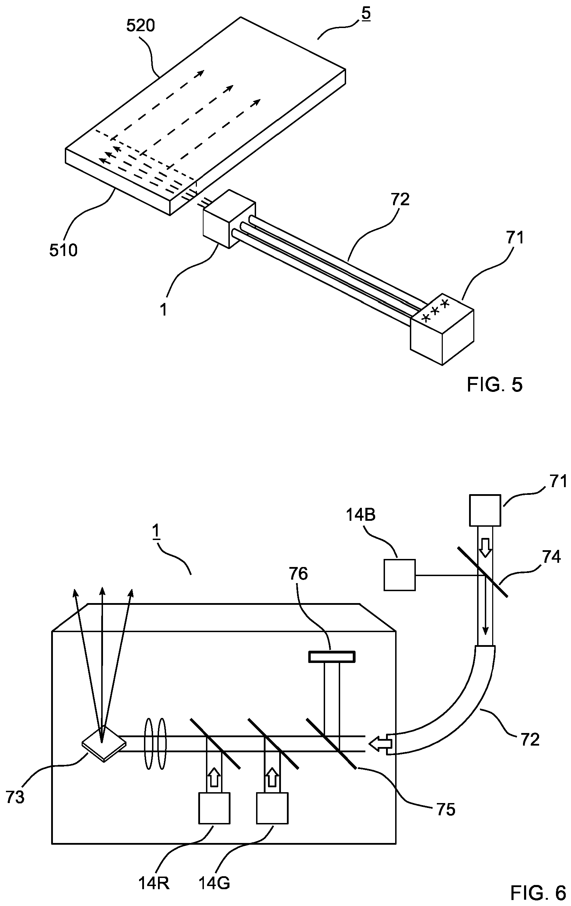

Fig. 5 zeigt ein erfindungsgemäßes Head-Up-Display mit einem Gerät zum Generieren eines virtuellen Bildes in schematischer Darstellung. Der Lichtwellenleiter 5 weist einen in Y-Richtung aufweitenden ersten Lichtwellenleiter 510 und einen in X-Richtung aufweitenden zweiten Lichtwellenleiter 520 auf. Eine Pumplichtquelle 71 ist mittels eines hier aus drei optischen Fasern bestehenden Verstärkermediums 72 mit dem Bildgenerator 1 verbunden. Dies ist in Fig. 6 vergrößert und mit mehr Details dargestellt. Die Optikeinheit ist der Einfachheit halber nicht dargestellt.

Fig. 6 zeigt schematisch den Bildgenerator 1 mit einer räumlich getrennten Lichtquelle 14B. In der Figur erkennt man im Bildgenerator 1 eine steuerbare Spiegeleinheit 73, die als Anzeigeelement 11 wirkt. Die Spiegeleinheit 73 besteht erfindungsgemäß aus einer zweidimensionalen Anordnung von Mikrospiegeln, die sich durch Ansteuerung hervorgerufen jeweils in einer von zwei Positionen befinden. Ein auf sie treffendes Lichtbündel wird somit in einem Pixelraster moduliert, um das virtuelle Bild zu generieren. Gemäß einer anderen Variante , welche nicht gemäß der Erfindung ist, besteht die steuerbare Spiegeleinheit 73 aus einem um mehrere Achsen verstellbaren Spiegel, der so angesteuert wird, dass ein auf ihn einfallender Laserstrahl gemäß einem zweidimensionalen Raster reflektiert wird und auf diese Weise das virtuelle Bild generiert.

Das Lichtbündel, das auf die Mikrospiegel der Spiegeleinheit 73 trifft, beziehungsweise der Laserstrahl, der auf den um mehrere Achsen verstellbaren Spiegel fällt, stammen von der Lichtquelle 14B. Das von der Lichtquelle 14B erzeugte Licht mit vorgegebener Wellenlänge dient somit zum Beleuchten der steuerbaren Spiegeleinheit 73.

Ganz rechts erkennt man die Pumplichtquelle 71, die Pumplicht einer Pumpwellenlänge erzeugt, und die räumlich getrennte Lichtquelle 14B vorgegebener Wellenlänge, hier für blaues Licht. Das von der Pumplichtquelle 71 und der Lichtquelle 14B kommende Licht wird in ein Verstärkermedium 72 eingekoppelt, hier angedeutet durch einen teildurchlässigen Spiegel 74. Im Verstärkermedium 72 wird das von der Lichtquelle 14B kommende Licht durch Aufnahme von Energie vom Pumplicht der Pumplichtquelle 71 verstärkt. Das Pumplicht wird entsprechend abgeschwächt und am Ende oder nach Verlassen des Verstärkermediums 72 aus dem Strahlengang ausgekoppelt. Dies ist hier mittels eines weiteren teildurchlässigen Spiegels 75 angedeutet, der das verbleibende Pumplicht in eine Strahlfalle 76 leitet.

Weitere Lichtquellen 14R und 14G sind hier als schematische Kästchen angedeutet. Sie können als herkömmliche Lichtquellen ausgelegt sein, beispielsweise als Leuchtdioden (LED), wenn diese die gewünschte Lichtstärke bereitzustellen vermögen. Alternativ zu einer derartigen Kombination von herkömmlichen Lichtquellen und einem Lichtfaserverstärker ist vorteilhaft vorgesehen, alle drei Lichtquellen 14R, 14G, 14B mit Pumplichtquellen und Verstärkermedien zu versehen. Dabei können sowohl getrennte Verstärkermedien für jede Wellenlänge vorgesehen sein, als auch ein Verstärkermedium, das zwei oder mehrere Wellenlängen verstärkt.

Faserverstärker sind im Bereich der optischen Datenübertragung weit verbreitet, arbeiten dort aber in der Regel im nahen infraroten Spektralbereich. Sofern derartige Faserverstärker genutzt werden sollen, können die gewünschten Elementarfarben durch Frequenzkonversion aus dem verstärkten Licht generiert werden, vorzugsweise durch Frequenzverdopplung.

Für die Erzeugung von Licht im roten Spektralbereich bietet sich beispielsweise die Verwendung eines Neodym-dotierten Faserverstärkers bei einer Pumpwellenlänge von 808nm an, siehe beispielsweise J. W. Dawson et al.: "E-band Nd3+ amplifier based on wavelength selection in an all-solid micro-structured fiber", Optics Express Vol. 25 (2017), Seiten 6524-6538.

Licht im grünen Spektralbereich kann unter Verwendung eines Ytterbium-dotierten Faserverstärkers bei einer Pumpwellenlänge von 975nm generiert werden. Siehe dazu beispielsweise M. Stappel et al.: "High power, continuous-wave, single-frequency fiber amplifier at 1091nm and frequency doubling to 545.5nm", Laser Physics Vol. 23 (2013).

Licht im blauen Spektralbereich kann unter Verwendung eines Ytterbium-dotierten Faserverstärkers bei einer Pumpwellenlänge von 914nm generiert werden. Siehe dazu beispielsweise A. Bouchier et al.: "Frequency doubling of an efficient continuous wave single-mode Yb-doped fiber laser at 978 nm in a periodically-poled MgO:LiNbO3 waveguide", Optics Express Vol. 13 (2005), Seiten 6974-6979.

### Bezugszeichenliste

- 1: Bildgenerator
- 11: Anzeigeelement
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie
- 25: Blendschutz

- 3: Spiegeleinheit
- 31: Windschutzscheibe

- 5: Lichtwellenleiter
- 51: Falthologramm
- 510: Erster Lichtwellenleiter (in Y-Richtung aufweitend)
- 52: Auskoppelhologramm
- 520: Zweiter Lichtwellenleiter (in X-Richtung aufweitend)
- 522: Spiegelebene
- 523: Spiegelebene
- 53: Einkoppelhologramm

- 61: Auge
- 62: Eyebox
- 63: Betrachtungsebene
- 64: Störlichtquelle
- 71: Pumplichtquelle
- 72: Verstärkermedium
- 73: Steuerbare Spiegeleinheit
- 74: Teildurchlässiger Spiegel
- 75: Teildurchlässiger Spiegel
- 76: Strahlfalle

- L1...L4: Licht
- SB1, SB2: Strahlenbündel
- SL: Sonnenlicht
- VB: Virtuelles Bild

## Patentansprüche

1. Head-Up-Display für ein Fahrzeug, mit einem Gerät zum Generieren eines virtuellen Bildes (VB), wobei das Gerät zum Generieren eines virtuellen Bildes (VB) aufweist:
- einen Bildgenerator (1) mit einem Anzeigeelement (11) umfassend eine steuerbare Spiegeleinheit (73) zum Erzeugen eines Bildes;
- zumindest eine Lichtquelle (14, 14R, 14G, 14B) zum Erzeugen von Licht mit vorgegebener Wellenlänge zum Beleuchten der steuerbaren Spiegeleinheit (73);
- einen flächigen Lichtwellenleiter (5, 510, 520) mit zweidimensionaler Vergrößerung zum Aufweiten einer Austrittspupille, in den das von der steuerbaren Spiegeleinheit (73) ausgehende Licht eingekoppelt wird; und
- ein Verstärkermedium (72) zum Verstärken des von der zumindest einen Lichtquelle (14, 14R, 14G, 14B) erzeugten Lichts, wobei das Verstärkermedium (72) ein Lichtfaserverstärker ist, mit dem eine Pumplichtquelle (71) zum Bereitstellen von Energie für den Lichtfaserverstärker mit dem Bildgenerator (1) verbunden ist, und wobei die Spiegeleinheit (73) aus einer zweidimensionalen Anordnung von Mikrospiegeln besteht.

2. Head-Up-Display gemäß Anspruch 1, wobei die zumindest eine Lichtquelle (14, 14R, 14G, 14B) ein Laser ist.

3. Head-Up-Display gemäß Anspruch 1 oder 2, wobei das Pumplicht nach Verlassen des Verstärkermediums (72) aus dem Strahlengang ausgekoppelt wird.

4. Head-Up-Display gemäß Anspruch 3, wobei das Pumplicht durch einen teildurchlässigen Spiegel (75) aus dem Strahlengang ausgekoppelt und in eine Strahlenfalle (76) geleitet wird.

5. Head-Up-Display gemäß einem der vorherigen Ansprüche, wobei das Gerät drei Lichtquellen (14R, 14G, 14B) zum Erzeugen von Licht in drei Elementarfarben aufweist.

6. Head-Up-Display gemäß einem der Ansprüche 1 bis 4, wobei das Gerät zum Generieren eines virtuellen Bildes (VB) zumindest ein nichtlinear-optisches Medium aufweist, um Licht in einer Elementarfarbe durch Frequenzkonversion aus dem von einer Lichtquelle (14, 14R, 14G, 14B) abgegebenen Licht zu generieren.

7. Head-Up-Display gemäß Anspruch 6, wobei die Frequenzkonversion eine Frequenzverdopplung ist.

8. Fahrzeug mit einem Head-Up-Display gemäß einem der Ansprüche 1 bis 7.

## Claims

1. A head-up display for a vehicle, having an apparatus for generating a virtual image (VB), wherein the apparatus for generating a virtual image (VB) has:
- an image generator (1) with a display element (11), comprising a controllable mirror unit (73) for generating an image;
- at least one light source (14, 14R, 14G, 14B) for generating light with a specified wavelength for illuminating the controllable mirror unit (73);
- a planar optical waveguide (5, 510, 520) with two-dimensional magnification for expanding an exit pupil into which the light emanating from the controllable mirror unit (73) is coupled; and
- an amplifier medium (72) for amplifying the light generated by the at least one light source (14, 14R, 14G, 14B), wherein the amplifier medium (72) is an optical fibre amplifier with which a pump light source (71) for providing energy for the light fibre amplifier is connected to the image generator (1), and wherein the mirror unit (73) consists of a two-dimensional array of micro-mirrors.

2. The head-up display according to claim 1, wherein the at least one light source (14, 14R, 14G, 14B) is a laser.

3. The head-up display according to claim 1 or 2, wherein the pump light is coupled out of the beam path after it leaves the amplifier medium (72).

4. The head-up display according to claim 3, wherein the pump light is coupled out of the beam path through a semi-reflective mirror (75) and guided into a beam trap (76).

5. The head-up display according to any one of the preceding claims, wherein the apparatus has three light sources (14R, 14G, 14B) for generating light in three elementary colours.

6. The head-up display according to any one of claims 1 to 4, wherein the apparatus for generating a virtual image (VB) has at least one non-linear optical medium in order to generate light in an elementary colour by frequency conversion from the light emitted by a light source (14, 14R, 14G, 14B).

7. The head-up display according to claim 6, wherein the frequency conversion is a frequency doubling.

8. A vehicle with a head-up display according to any one of claims 1 to 7.

## Revendications

1. Affichage tête haute pour véhicule, comprenant un appareil de génération d'image virtuelle (VB), dans lequel l'appareil de génération d'image virtuelle (VB) présente :
- un générateur d'images (1) avec un élément d'affichage (11) comprenant une unité de miroir contrôlable (73) pour générer une image ;
- au moins une source lumineuse (14, 14R, 14G, 14B) pour générer de la lumière ayant une longueur d'onde prédéterminée afin d'éclairer l'unité de miroir contrôlable (73) ;
- un guide d'ondes optique planaire (5, 510, 520) présentant un grossissement bidimensionnel pour dilater une pupille de sortie, dans lequel est injectée la lumière émanant de l'unité de miroir contrôlable (73) ; et
- un milieu amplificateur (72) destiné à amplifier la lumière générée par l'au moins une source lumineuse (14, 14R, 14G, 14B), dans lequel le milieu amplificateur (72) est un amplificateur à fibre optique, auquel une source de lumière de pompage (71), destinée à fournir de l'énergie à l'amplificateur à fibre optique, est connectée par l'intermédiaire du générateur d'images (1), et dans lequel l'unité de miroir (73) est constituée d'un agencement bidimensionnel de micromiroirs.

2. Affichage tête haute selon la revendication 1, dans lequel l'au moins une source lumineuse (14, 14R, 14G, 14B) est un laser.

3. Affichage tête haute selon la revendication 1 ou 2, dans lequel la lumière de pompage est extraite du trajet optique après avoir quitté le milieu amplificateur (72).

4. Affichage tête haute selon la revendication 3, dans lequel la lumière de pompage est extraite du trajet du faisceau par un miroir partiellement transparent (75) et dirigée vers un piège à rayonnement (76).

5. Affichage tête haute selon l'une des revendications précédentes, dans lequel l'appareil présente trois sources lumineuses (14R, 14G, 14B) pour générer de la lumière dans trois couleurs élémentaires.

6. Affichage tête haute selon l'une quelconque des revendications 1 à 4, dans lequel l'appareil de génération d'image virtuelle (VB) présente au moins un milieu optique non linéaire pour générer de la lumière dans une couleur élémentaire par conversion de fréquence à partir de la lumière émise par une source lumineuse (14, 14R, 14G, 14B).

7. Affichage tête haute selon la revendication 6, dans lequel la conversion de fréquence est un doublage de fréquence.

8. Véhicule doté d'un affichage tête haute selon l'une des revendications 1 à 7.
